(19) Europäisches Patentamt
European Patent Office
Office européen des brevets

(11) **EP 3 465 123 B1**

(12) **FASCICULE DE BREVET EUROPEEN**

(45) Date de publication et mention
de la délivrance du brevet:
**18.11.2020 Bulletin 2020/47**

(51) Int Cl.:
***G01L 5/24*** *(2006.01)*  ***F16B 31/02*** *(2006.01)*
***G01L 5/16*** *(2020.01)*

(21) Numéro de dépôt: **17731229.5**

(22) Date de dépôt: **26.05.2017**

(86) Numéro de dépôt international:
**PCT/FR2017/051317**

(87) Numéro de publication internationale:
**WO 2017/203188 (30.11.2017 Gazette 2017/48)**

(54) **CAPTEUR POUR MESURER UNE FORCE DE SERRAGE APPLIQUÉE SUR UN ORGANE D'ASSEMBLAGE A VIS**

SENSOR ZUR MESSUNG EINER AUF EIN SCHRAUBMONTAGEELEMENT ANGEWANDTEN ANDRÜCKKRAFT

SENSOR FOR MEASURING A TIGHTENING FORCE APPLIED ON A SCREW-ASSEMBLY MEMBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.05.2016 FR 1654719**

(43) Date de publication de la demande:
**10.04.2019 Bulletin 2019/15**

(73) Titulaire: **Centre Technique Des Industries Mecaniques**
**60300 Senlis (FR)**

(72) Inventeur: **ANTHOINE-MILHOMME, Didier**
**73410 Albens (FR)**

(74) Mandataire: **Fédit-Loriot**
**38, avenue Hoche**
**75008 Paris (FR)**

(56) Documents cités:
**FR-A3- 3 025 883  JP-A- 2006 162 394**
**US-B1- 6 250 863**

**Description**

La présente invention se rapporte à un capteur pour mesurer une force de serrage appliquée sur un organe d'assemblage à vis.

En particulier dans le domaine ferroviaire, l'importance de la fixation des éclisses de chemin de fer impose de maîtriser avec précision les efforts de serrage appliqués lors de sa fixation à une paire de rails.

Lorsqu'on souhaite connaitre l'intensité d'une force de serrage appliquée par une machine-outil, par exemple une visseuse électrique, sur un assemblage à vis, il est connu d'utiliser des capteurs d'effort de serrage.

Ces capteurs d'effort, aussi appelés capteurs de force, sont installés de manière à être comprimés lors du serrage, par exemple entre un écrou vissé sur une tige filetée contre une éclisse de sorte à fixer l'éclisse à un rail.

Les capteurs d'effort comprennent des jauges de déformations détectant la déformation du capteur et mesurant l'intensité d'un signal électrique produit par la déformation de la jauge, ce qui permet d'en déduire l'intensité de la force de serrage, aussi appelée effort de serrage.

Dans l'état de l'art, on connaît notamment les documents suivants:

Le document FR 3 025 883 A3 divulgue un capteur permettant de mesurer une force de serrage s'exerçant entre deux organes mécaniques et se présentant sous la forme d'une bague comportant une surface plane, le circuit de mesure étant monté sur la surface plane de la bague.

Le document US 6 250 863 B1 divulgue une rondelle permettant de mesurer l'effort de serrage d'un assemblage à vis, la rondelle comportant un méplat sur lequel sont fixées des jauges de contraintes. Afin d'améliorer la précision de la mesure, ce document propose des moyens de compensation de l'effet des variations de la température comportant notamment des jauges de contraintes disposées sur une partie non déformée par la force de serrage. En outre, dans un mode de réalisation, la surface supérieure de la bague est pourvue d'une pluralité de portions saillantes dans la direction de serrage afin de compenser les erreurs de mesure dues aux irrégularités de surface de la tête de vis.

Le document JP 2006 162394 divulgue une bague de mesure d'une force de serrage comportant une pluralité de jauges de contraintes réparties sur la circonférence de la bague.

Cependant, le point d'application de l'effort de serrage sur la bague n'est pas toujours dans l'axe principal de serrage, en particulier dans l'axe principal du vissage pour les assemblages à vis, ce point d'application pouvant varier en fonction notamment des machines-outils employées et de l'agencement de l'ensemble à serrer.

Les capteurs connus dans l'art antérieur qui permettent de détecter l'éloignement du point d'application de l'effort de serrage de l'axe principal de serrage imposent d'installer des jauges de déformation sur des supports souples épousant la courbure de la bague. Or, ce type de solution est associé à un coût de fabrication relativement élevé et à une consommation électrique relativement importante.

En conséquence, il existe le besoin d'un capteur de mesure d'un effort de serrage permettant de mesurer l'effort de serrage appliqué par un outil de serrage sur un organe d'assemble à vis, en détectant l'éloignement du point d'application de l'effort de serrage de l'axe principal de serrage, qui présente un coût de fabrication relativement faible et permettant d'optimiser sa consommation énergétique.

On propose un capteur pour mesurer une force de serrage appliquée sur un organe d'assemblage à vis, comprenant une bague présentant au moins deux faces opposées axialement l'une de l'autre et une surface plane perpendiculaire auxdites deux faces opposées.

Le capteur comprend un dispositif électronique comportant une bande support longitudinale présentant deux extrémités opposées, ladite bande support étant installée sur ladite surface plane.

Ledit dispositif électronique comprend trois circuits montés sur ladite bande support longitudinale, pour lesquels :

- un premier circuit est apte à générer un signal représentatif d'une force de serrage appliquée dans une direction de serrage sur l'une des deux faces opposées ;
- un deuxième circuit est apte à générer un signal représentatif de l'éloignement de ladite force appliquée par rapport au centre de la bague dans une première direction perpendiculaire à ladite direction de serrage ; et
- un troisième circuit est apte à générer un autre signal représentatif de l'éloignement de ladite force appliquée par rapport au centre de la bague dans une deuxième direction perpendiculaire à ladite direction de serrage.

Ainsi, il est possible de mesurer un effort de serrage appliqué par une machine-outil, par exemple une visseuse, sur un organe d'assemblage à vis, en mesurant à la fois l'intensité de serrage appliquée dans l'axe principal de vissage, mais aussi l'éloignement de l'effort de serrage selon deux axes perpendiculaires à l'axe principal de vissage, de manière à pouvoir affiner la valeur mesurée de l'effort de serrage. Cette solution permet ainsi d'obtenir toutes ces mesures en installant les jauges de déformation sur un support plan et rigide. Une telle solution permet ainsi de réduire les coûts de fabrication du capteur et améliore sa consommation électrique.

Avantageusement et de manière non limitative, le premier circuit comprend un montage en pont complet de jauges de déformation. Ainsi, l'effort de serrage dans l'axe principal de serrage peut être déterminé de manière relativement fiable et peu coûteuse.

Avantageusement et de manière non limitative, le montage en pont complet comprend deux jauges de déformations installées chacune sur une extrémité opposée de la bande support, et deux jauges installées chacune au voisinage du centre de la bande support, et espacées dudit centre de sorte que l'une est le symétrique de l'autre par rapport au centre de la bande support. De cette manière on optimise la qualité de la mesure de l'effort de serrage dans l'axe principal de serrage.

Avantageusement et de manière non limitative, le deuxième circuit et/ou le troisième circuit comprennent un montage en demi pont de jauges de déformation. Ainsi, on peut déterminer au moins une direction d'éloignement, aussi appelée direction de décalage, du point d'application de l'effort de serrage sur la bague par rapport à l'axe principal de serrage.

Avantageusement et de manière non limitative, le montage en demi pont de jauges du deuxième circuit comprend une première jauge installée sur une extrémité de la bande support et une deuxième jauge installée au voisinage du centre et éloignée du centre dans la direction principale de serrage. De cette manière on optimise la qualité de la mesure de l'éloignement de l'effort de serrage par le deuxième circuit.

Avantageusement et de manière non limitative, la deuxième jauge du deuxième circuit est éloignée par rapport au centre de la bande support dans la direction principale de serrage de sorte que la deuxième jauge est rapprochée en direction de ladite face sur laquelle est appliquée la force de serrage. De cette manière on optimise la qualité de la mesure de l'éloignement du point d'application de l'effort de serrage sur la bague par le deuxième circuit.

Avantageusement et de manière non limitative, le montage en demi pont de jauges du troisième circuit comprend une première jauge installée sur une extrémité de la bande support et une deuxième jauge installée au voisinage du centre et éloignée du centre dans la première direction perpendiculaire à ladite direction de serrage. De cette manière on optimise la qualité de la mesure d'éloignement du point d'application de l'effort de serrage sur la bague par le troisième circuit.

Avantageusement et de manière non limitative, la première jauge du montage en demi pont de jauges du deuxième circuit est installé sur une bordure opposée à la première jauge du montage en demi pont de jauges du troisième circuit. Ainsi, on optimise la répartition des jauges sur la bande support, ce qui améliore les mesures car il est alors possible de déterminer de manière plus fine les déformations de la bague du capteur.

Dans un mode de réalisation particulier, la première direction correspond à la direction longitudinale de la bande support. On peut en particulier, définir cette première direction par rapport à la direction la plus probablement associée à un décalage de l'effort de serrage, par exemple dans le cas du serrage d'une éclisse sur un rail de chemin de fer installé à l'horizontale, verticalement ou dans le sens de la longueur du rail.

Avantageusement, la deuxième direction s'étend selon un axe formant une base ortho-normale avec un axe dans lequel s'étend la première direction et avec un axe dans lequel s'étend la direction principale de serrage. Ainsi, on peut mesurer le décalage d'un effort de serrage dans deux directions perpendiculaires à l'axe principal de serrage, selon deux axes, en particulier formant une base ortho-normale avec l'axe principal de serrage, ce qui permet de détecter tous les décalages possible de l'effort de serrage par rapport à la direction principale de serrage.

L'invention concerne aussi un procédé de mesure d'une force de serrage appliquée contre une face d'un capteur tel que décrit précédemment, lors du serrage d'un organe d'assemblage à vis traversant ladite ouverture du capteur, comprenant une étape d'étalonnage au cours de laquelle on applique successivement une pluralité de forces sur au moins l'une des deux faces parallèles du capteur, et au cours de laquelle on mesure les signaux générés par le premier circuit, le deuxième circuit et le troisième circuit, de sorte à déterminer des paramètres permettant d'estimer la valeur des forces appliquées contre ladite face du capteur et l'éloignement de ces forces par rapport au centre de ladite ouverture du capteur, et une étape de mesure de ladite force de serrage appliquée en fonction desdits signaux générés par lesdits trois circuits et des paramètres déterminés lors de l'étape d'étalonnage.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la figure 1 est une vue en perspective d'un éclisse montée sur le bord d'un rail de chemin de fer et d'un capteur d'effort selon un mode de réalisation de l'invention installé pour mesurer un effort de serrage d'un écrou destiné à fixer l'éclisse sur le rail ;
- la figure 2 est une section droite d'un capteur selon le mode de réalisation de la figure 1 ;
- la figure 3 est une vue du dessus d'une face plane de la bague sur laquelle est installée le dispositif électronique d'un capteur selon le mode de réalisation de l'invention de la figure 1 ; et
- la figure 4 est un schéma électrique du dispositif électronique du capteur selon le mode de réalisation de la figure 1.

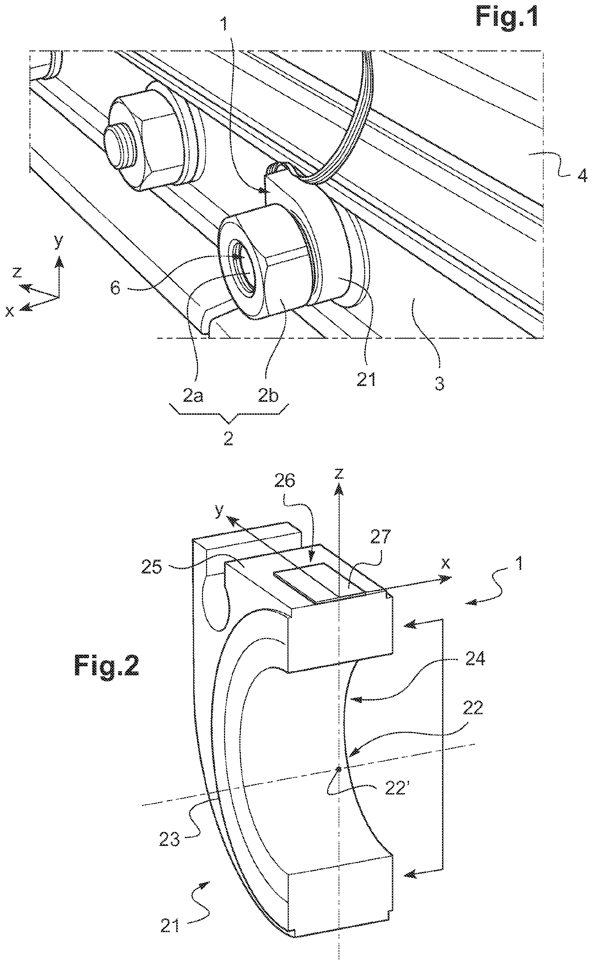

Les figures 1 à 4 se rapportant à un même mode de réalisation seront commentées simultanément.

Un capteur 1 permet de mesurer une force de serrage est appliqué sur un organe 2 d'assemblage à vis.

Ici l'organe 2 d'assemblage à vis comprend une tige filetée 2a sur laquelle est vissé un écrou 2b.

Dans ce mode de réalisation, la tige filetée 2a est couplée à un rail 4 de chemin de fer, par exemple un écrou non représenté est vissé à une extrémité libre de la tige filetée 2a de manière à pouvoir maintenir la tige filetée en butée contre le rail 4 lors d'un serrage d'un autre écrou 2b à une autre extrémité libre.

La tige filetée 2a traverse une éclisse 3 installée contre un bord du rail 4 et reçoit à l'autre extrémité libre 6 un écrou 2b pour lequel on souhaite mesurer un effort de serrage.

Le capteur 1 comprend une bague 21 engagée sur la tige filetée 2a, présentant un orifice 22 de forme sensiblement circulaire. Dans ce mode de réalisation l'orifice 22 présente un diamètre de 28mm, mais il peut présenter tout diamètre permettant d'être traversé par une tige filetée ou tout autre organe d'assemblage à vis.

L'orifice 22 traverse la bague 21 selon un axe principal X définissant la direction principale de serrage de l'écrou 2b vissé sur la tige filetée 2a contre l'éclisse 3. Autrement dit, la tige filetée 2a s'étend le long de l'axe principal X, et la direction principale de serrage de l'écrou 2b est définie par cet axe principal X. On se référera dans la suite de la description à cet axe principal X comme étant l'axe principal de vissage X.

La bague 21 est faite dans un matériau rigide, par exemple un métal apte à être légèrement déformé par des efforts de compression, tout en pouvant reprendre sa forme initiale lorsque la compression cesse.

En effet, la bague 21 est destinée à être serrée contre l'éclisse 3 par l'écrou 2b lorsqu'il est vissé sur la tige filetée 2a. Ainsi, les déformations de la bague 21 du capteur 1 occasionnées par la compression de l'écrou 2b vissé sur la bague sont mesurées par le capteur 1 afin de déterminer l'effort de serrage.

La bague 21 présente deux face opposées 23, 24 sensiblement planes. L'orifice 22 s'étend au travers de la bague 21 entre les deux faces opposées 23, 24.

Une première face 23 vient en butée contre l'éclisse 3 tandis que l'autre face 24 est au contact de l'écrou 2b venant comprimer la bague 21 contre l'éclisse 3. Ainsi, l'autre face 24 est la face sur laquelle l'effort de serrage est appliqué.

La bague 21 présente aussi une face d'installation 25 d'un dispositif électronique 26.

La face d'installation 25 est une face sensiblement plane, s'étendant dans un plan perpendiculaire aux deux faces opposées 23,24, sur une longueur supérieure ou égale au diamètre de l'orifice 22.

Le dispositif électronique 26 comprend une bande support 27 longitudinale fixée sur la face 25 sensiblement plane.

La bande support 27 s'étend sur la face d'installation 25 de sorte à être disposée de manière ortho-radiale par rapport à l'orifice 22.

Avantageusement, la bande support 27 s'étend sur une longueur supérieure ou égale au diamètre de l'orifice 22.

En particulier, plus la longueur de la bande support 26 est importante, meilleure est la qualité des mesures de déformation décrites ci-après.

Le dispositif électronique 26 comprend aussi trois circuit 41, 42, 43, montés fixement sur la bande support 27.

Les trois circuits 41, 42, 43 sont alimentés par un accumulateur électrique, non représenté, soudé sur un circuit imprimé, qui peut par exemple être installé sur la bande support 27.

Selon une alternative, l'accumulateur électrique peut être une pile amovible.

Le premier circuit 41 est adapté pour générer un signal représentatif d'une force de serrage appliquée dans une direction de serrage sur l'une des deux faces opposées 23, 24.

Le premier circuit 41 comprend un montage 41 en pont de Wheatstone de quatre jauges de déformation J1, J2, J3, J4. Autrement dit, le premier circuit 41 comprend quatre jauges de déformation J1, J2, J3, J4, montées ensemble selon un schéma bien connu de l'homme du métier, dit montage en pont de Wheatstone complet, généralement dit montage en pont complet.

Les jauges de déformation J1, J2, J3, J4 du premier montage en pont complet 41 sont appariées deux à deux, de sorte qu'une première paire de jauges J1, J2 est installée de manière symétrique à la deuxième paire de jauges J3, J4 dans la longueur du circuit imprimé, par rapport au centre 28 de la bande support 27.

La bande support 27 est installée sur la face d'installation 25 de sorte que le centre 28 de la bande support 27 correspond sensiblement au point d'arrivée d'une projection orthogonale du centre 22' de l'orifice 22 de la bague 21 sur la bande support 27.

Pour chaque paire de jauges de déformation J1, J2, J3, J4, une première jauge J1, J3 est installée au voisinage du centre 28 de la bande support 27 tandis qu'une deuxième jauge J2, J4 est installée sur une bordure longitudinale 33, 34 de la bande support 27.

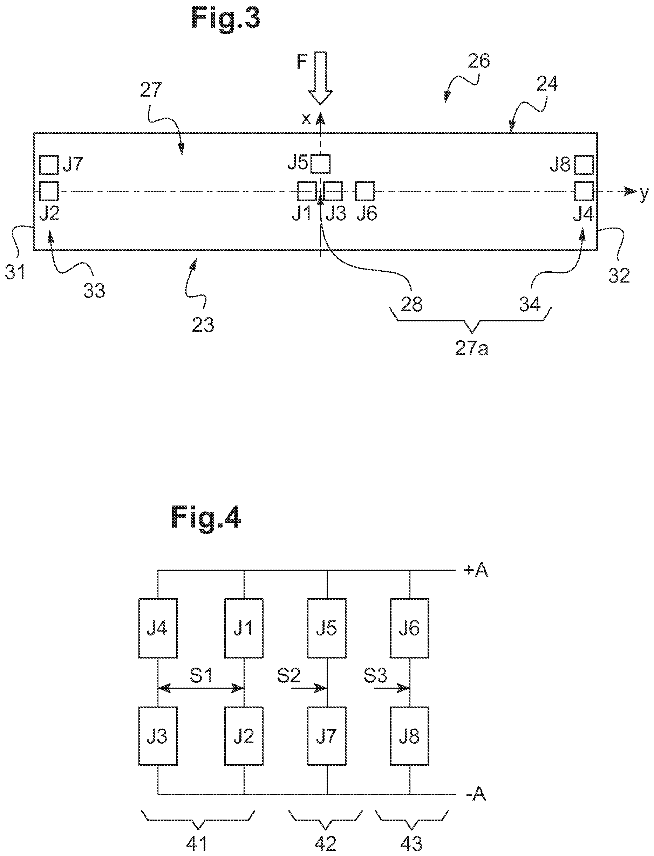

On mesure une première tension S1 au centre du pont complet, en référence à la figure 4, représentant la variation des jauges de déformation J1, J2, J3, J4, permettent de déterminer la valeur de l'effort de serrage appliqué sur une face 24 de la bague 21 parmi les faces opposées 23, 24.

La première tension S1 mesurée au centre du pont complet correspond à la différence de potentiels mesurés respectivement à la jonction entre les jauges J1, J2 et J3, J4 d'une même paire de jauges de déformations J1, J2, J3, J4.

Le deuxième circuit 42 est apte à générer un signal représentatif de l'éloignement du point d'application de l'effort de serrage par rapport au centre 22' de la bague 21 dans une première direction perpendiculaire à ladite direction de serrage.

Ici, la première direction perpendiculaire s'étend selon un axe Y définissant la longueur dans laquelle s'étend la bande support 27 longitudinale.

Le deuxième circuit 42 comprend un montage 42 en demi-pont de Wheatstone, formé de deux jauges de déformations J5, J7.

Une première jauge de déformation J5 du deuxième circuit 42 est disposée sensiblement à équidistance des deux extrémités longitudinales 31, 32 de la bande support 27, dans une position sensiblement décalée du milieu 28 de la bande support le long de l'axe X principal de vissage. Deux jauges J1, J3 du premier montage 41 étant installées de part et d'autre du milieu 28 de la bande support 27, il est dans ce mode de réalisation peu aisé d'installer la première jauge de déformation J5 du deuxième circuit 42 au milieu 28 de la bande support 27.

Aussi, la première jauge de déformation J5 du deuxième circuit 42 est rapprochée de la face 24 sur laquelle l'effort de serrage est appliqué.

La deuxième jauge de déformation J7 du deuxième circuit 42 est installée sur l'une des bordures longitudinales 33, 34 de la bande support 27.

On mesure alors une deuxième tension S2 correspondant à la différence de potentiels mesurés entre respectivement la jonction entre les deux jauges J5, J7 du deuxième circuit 42 et un potentiel de référence, préférentiellement invariant ou faiblement variable, par exemple pris à une borne d'une jauge J2, J4 installée sur une bordure 33, 34 de la bande support 27.

Avantageusement, le potentiel de référence de la deuxième tension S2 est pris sur un demi-pont de résistances non actives en déformation, non représenté.

Les variations de la deuxième tension S2 permettent de détecter l'éloignement de l'effort de serrage appliqué sur la bague 21 par rapport à l'axe Y perpendiculaire à l'axe principal X de la portion longitudinale formant un plan parallèle au plan de la partie plane de la portion longitudinale.

Le troisième circuit 43 est un circuit apte à générer un autre signal représentatif de l'éloignement de l'effort de serrage par rapport au centre 22' de l'ouverture circulaire 22 de la bague 21 dans une deuxième direction perpendiculaire à ladite direction de serrage.

Ici, la deuxième direction perpendiculaire s'étend le long de l'axe Z formant une base ortho-normale avec l'axe X principal de serrage et l'axe selon lequel est dirigée la première direction perpendiculaire Y.

Le troisième circuit 43 comprend un montage 43 en demi-pont de Wheatstone formé de deux jauges de déformations J6, J8.

Une première jauge de déformation J6 du troisième circuit 43 est disposée sur une première moitié 27a de la bande support, de sorte à être plus proche du centre 28 de la bande support 27 que de la bordure 34. Ici, la première jauge J6 est disposée sensiblement à une distance du centre 28, dans la direction longitudinale, comprise entre 5% et 20% de la longueur de la première moitié 27a de la bande support 27.

La deuxième jauge de déformation J8 du troisième circuit 43 est quant à elle installée sur une bordure 34 de la bande support 27. Cette bordure 34 est différente de la bordure 33 sur laquelle est installée la deuxième jauge J7 du deuxième circuit 42. Autrement dit, la deuxième jauge J8 du troisième circuit 43 est opposée de la deuxième jauge J7 du deuxième circuit dans la longueur de la bande support 27.

On mesure alors une troisième tension S3 correspondant à la différence de potentiels mesurés entre respectivement la jonction entre les deux jauges J6, J8 du troisième circuit 43 et un potentiel de référence, préférentiellement invariant ou faiblement variable, par exemple pris à une borne d'une jauge J2, J4 installée sur une bordure 33, 34 de la bande support 27.

Avantageusement, le potentiel de référence de la troisième tension S3 est pris sur un demi-pont de résistances non actives en déformation, non représenté.

Les variations de la troisième tension S3 permettent de détecter l'éloignement de l'effort de serrage par rapport au centre 22' de l'orifice 22 de la bague 21 selon la deuxième direction perpendiculaire Z.

Le capteur 1 comprend en outre un organe, non représenté, apte à mettre en œuvre un procédé de mesure d'une force de serrage appliquée contre une face du capteur, lors du serrage de l'organe d'assemblage vissé 2 traversant l'orifice 22 du capteur 1.

Cet organe comprend un microprocesseur, une mémoire et des entrées-sorties aptes à communiquer avec les trois circuits 41, 42, 43 du capteur de force 1. Cependant, l'organe de mise en œuvre du procédé selon l'invention ne se limite pas à cette forme et peu être constitué de tout élément adapté connu de l'homme du métier.

Le procédé de mesure d'un effort de serrage comprend une étape d'étalonnage au cours de laquelle on applique successivement une pluralité d'efforts de serrages prédéterminés, décalés suivant la première et la deuxième direction perpendiculaire, ou autrement dit le long des axes Y et Z formant une base ortho-normale avec l'axe X selon lequel s'étend la direction principale de serrage et éventuellement en appliquant aussi un effort de serrage non décalé.

Ces efforts décalés et non décalés sont appliqués sur la face 24 sur laquelle l'effort de serrage est appliqué tandis qu'on mesure les signaux générés par le premier circuit 41, le deuxième circuit 42 et le troisième circuit 43, de sorte à déterminer des paramètres a1, b1, c1, a2, b2, c2, a3, b3, c3, d1, d2, d3 permettant d'estimer la valeur des forces appliquées contre la face 24 du capteur et le décalage de ces forces par rapport au centre de l'ouverture 22 de la bague 21 du capteur 1.

Les paramètres a1, b1, c1, a2, b2, c2, a3, b3, c3, d1, d2, d3 d'étalonnage sont déterminés de manière à résoudre le système d'équations suivant :

$$\begin{cases} S1 = a1.F + b1.F.y + c1.F.z \\ S2 = a2.F + b2.F.y + c2.F.z \quad (1) \\ S3 = a3.F + b3.F.y + c3.F.z \end{cases}$$

Puis, après détermination de ces paramètres a1, b1, c1, a2, b2, c2, a3, b3, c3, on peut déterminer une équation de la forme :

$$F = A.S1 + B.S2 + C.S3 \quad (2)$$

Dans laquelle d'autres paramètres A, B et C sont déterminés en fonction des paramètres a1, b1, c1, a2, b2, c2, a3, b3, c3, d1, d2, d3 d'étalonnage déterminés précédemment.

Cette équation (2) permet alors de déterminer directement l'intensité précise d'un effort de serrage en tenant compte de l'éloignement du point d'application de cet effort de serrage par rapport à l'axe principal de serrage, en fonction des paramètres a1, b1, c1, a2, b2, c2, a3, b3, c3, d1, d2, d3, et des tensions S1, S2, S3 mesurées respectivement par les premier 41, deuxième 42 et troisième 43 circuits.

Ensuite, lorsqu'un effort de serrage à mesurer est appliqué contre la bague 21, on met en œuvre une étape de mesure de la force de serrage appliquée en fonction des signaux de mesure de tension S1, S2, S3 générés par les trois circuits 41, 42, 43 et des autres paramètres A, B et C déterminés au cours de l'étape d'étalonnage.

Ici, l'étape de mesure met en œuvre une étape de résolution de l'équation (2) pour déterminer la valeur de l'intensité de l'effort de serrage appliqué.

Ainsi, une fois ces autres paramètres A, B et C déterminés, on peut, en fonction des tensions S1, S2, S3 respectivement des premier 41, deuxième 42 et troisième 43 circuits déterminer l'intensité d'un effort de serrage appliqué sur la bague 21 en tenant compte de l'éloignement du point d'application de cet effort par rapport à l'axe X dans lequel s'étend la direction principale de serrage. Autrement dit, le procédé selon l'invention permet de déterminer l'écartement du point d'application de l'effort de serrage par rapport à l'axe principal de serrage, de sorte qu'il est alors possible de déterminer finement l'intensité de l'effort de serrage.

Selon un exemple non représenté et non couvert par l'objet des revendications, la bande de support du dispositif électronique n'est pas installée sur une face plane de la bague. Elle est directement fixée sur la circonférence de la bague, ce qui est rendu possible par l'utilisation d'un matériau de bande support soit souple soit préformée à une valeur de rayon de courbure correspondant au rayon externe de la bague. Selon cet exemple, l'homme du métier ré-agencera les jauges de déformations de manière non plus longitudinale, tel que pour le mode de réalisation principal, mais axiale par rapport à l'axe de l'ouverture de la bague du capteur.

**Revendications**

1. Capteur (1) pour mesurer une force de serrage appliquée sur un organe (2) d'assemblage à vis, comprenant une bague (21) présentant au moins deux faces opposées (23, 24) axialement l'une de l'autre et une surface plane (25) perpendiculaire auxdites deux faces opposées (23, 24),

   le capteur (1) comprenant un dispositif électronique (26) comportant une bande support longitudinale (27) présentant deux extrémités opposées (31, 32), ladite bande support (27) étant installée sur ladite surface plane (25),

   ledit dispositif électronique (26) comprenant trois circuits (41, 42, 43) montés sur ladite bande support longitudinale (27) pour lesquels :

   - un premier circuit (41) est apte à générer un signal représentatif d'une force de serrage appliquée dans une direction de serrage sur l'une des deux faces opposées (23, 24) ;
   - un deuxième circuit (42) est apte à générer un signal représentatif de l'éloignement de ladite force appliquée par rapport au centre (22') de la bague (21) dans une première direction perpendiculaire à ladite direction de serrage ; et
   - un troisième circuit (43) est apte à générer un autre signal représentatif de l'éloignement de ladite force appliquée par rapport au centre (22') de la bague (21) dans une deuxième direction perpendiculaire à ladite direction de serrage.

2. Capteur de mesure (1) selon la revendication 1, dans lequel le premier circuit (41) comprend un montage en pont complet de jauges de déformation (J1, J2, J3, J4).

3. Capteur de mesure (1) selon la revendication 2, dans lequel le montage en pont complet comprend deux jauges de déformations (J2, J4) installées chacune sur une extrémité opposée (31, 32) de la bande support (27), et deux jauges (J1, J3) installées chacune au voisinage du centre (28) de la bande support (27), et espacées dudit centre (28) de sorte que l'une est le symétrique de l'autre par rapport au centre (28) de la bande support (27).

4. Capteur de mesure (1) selon l'une quelconque des revendications 1 à 3, dans lequel le deuxième circuit (42) et le troisième circuit (43) comprennent un montage en demi pont de jauges de déformation.

5. Capteur de mesure (1) selon la revendication 4, dans lequel le montage en demi pont de jauges du deuxième circuit (42) comprend une première jauge (J7) installée sur une extrémité (31) de la bande support (27) et une deuxième jauge (J5) installée au voisinage du centre (28) et éloignée du centre (28) dans la direction principale de serrage.

6. Capteur de mesure (1) selon la revendication 5, dans lequel la deuxième jauge (J5) du deuxième circuit (42) est éloignée par rapport au centre (28) de la bande support (27) dans la direction principale de serrage de sorte que la deuxième jauge (J5) est rapprochée en direction de ladite face (24) sur laquelle est appliquée la force de serrage.

7. Capteur de mesure (1) selon l'une quelconque des revendications 4 à 6, dans lequel le montage en demi pont de jauges du troisième circuit (43) comprend une première jauge (J8) installée sur une extrémité (32) de la bande support (27) et une deuxième jauge (J6) installée au voisinage du centre (28) et éloignée du centre (28) dans la première direction perpendiculaire à ladite direction de serrage.

8. Capteur de mesure (1) selon la revendication 7 lorsqu'elle dépend de la revendication 5 ou 6, dans lequel la première jauge (J7) du montage en demi pont de jauges du deuxième circuit (42) est installé sur une bordure (33) opposée à la première jauge (J8) du montage en demi pont de jauges du troisième circuit (43).

9. Capteur de mesure (1) selon l'une quelconque des revendications 1 à 8, dans lequel la première direction correspond à la direction longitudinale de la bande support (27).

10. Capteur de mesure (1) selon l'une quelconque des revendications 1 à 9, dans lequel la deuxième direction s'étend selon un axe (Z) formant une base orthonormale avec un axe (Y) dans lequel s'étend la première direction et avec un axe (X) dans lequel s'étend la direction principale de serrage.

11. Procédé de mesure d'une force de serrage appliquée contre une face (24) d'un capteur de mesure (1) selon l'une quelconque des revendications 1 à 9, lors du serrage d'un organe d'assemblage à vis (2), comprenant une étape d'étalonnage au cours de laquelle on applique successivement une pluralité de forces sur ladite face (24) du capteur (1), et au cours de laquelle on mesure les signaux générés par le premier circuit (41), le deuxième circuit (42) et le troisième circuit (43), de sorte à déterminer des paramètres (a1, b1, c1, a2, b2, c2, a3, b3, c3, d1, d2, d3) permettant d'estimer la valeur des forces appliquées contre ladite face (24) du capteur (1) et l'éloignement de ces forces par rapport au centre (22') de ladite ouverture (22) du capteur (1), et une étape de mesure de ladite force de serrage appliquée en fonction desdits signaux générés par lesdits trois circuits et des paramètres (a1, b1, c1, a2, b2, c2, a3, b3, c3, d1, d2, d3) déterminés lors de l'étape d'étalonnage.

**Patentansprüche**

1. Ein Sensor (1) zum Messen einer Spannkraft bzw.

Klemmkraft bzw. Andrückkraft, die auf ein Schraubverbindungsorgan (2) aufgebracht wird, der einen Ring (21) umfasst, der mindestens zwei axial gegenüberliegende Flächen (23, 24) und eine ebene Fläche (25) senkrecht zu den beiden gegenüberliegenden Flächen (23, 24) aufweist,
wobei der Sensor (1) eine elektronische Vorrichtung (26) umfasst, die ein längliches Trägerband (27) mit zwei gegenüberliegenden Enden (31, 32) beinhaltet,
wobei das genannte Trägerband (27) auf der genannten ebenen Fläche (25) installiert ist,
wobei die genannte elektronische Vorrichtung (26) drei Schaltungen (41, 42, 43) umfasst, die auf dem genannten länglichen Trägerband (27) montiert sind, bei denen:

    - eine erste Schaltung (41) in der Lage ist, ein Signal zu erzeugen, das für eine Spannkraft steht, die in einer Spannrichtung auf eine der beiden gegenüberliegenden Flächen (23, 24) ausgeübt wird;
    - eine zweite Schaltung (42) geeignet ist, ein Signal zu erzeugen, das für den Abstand der genannten aufgebrachten Kraft von der Mitte (22') des Rings (21) in einer ersten Richtung senkrecht zur genannten Spannrichtung steht; und bei denen
    - eine dritte Schaltung (43) dazu geeignet ist, ein weiteres Signal zu erzeugen, das für den Abstand der genannten aufgebrachten Kraft von der Mitte (22') des Rings (21) in einer zweiten Richtung senkrecht zur genannten Spannrichtung steht.

2. Der Messsensor (1) nach Anspruch 1, wobei die erste Schaltung (41) eine Vollbrückenanordnung von Dehnungsmessstreifen (J1, J2, J3, J4) umfasst.

3. Der Messsensor (1) nach Anspruch 2, wobei die Vollbrückenanordnung Folgendes umfasst: zwei Dehnungsmessstreifen (J2, J4), die jeweils an einem gegenüberliegenden Ende (31, 32) des Trägerbandes (27) installiert sind, und zwei Dehnungsmessstreifen (J1, J3), die jeweils in der Nähe der Mitte (28) des Trägerbandes (27) installiert und von der genannten Mitte (28) so beabstandet sind, dass einer relativ zur Mitte (28) des Trägerbandes (27) symmetrisch zum anderen ist.

4. Der Messsensor (1) nach irgendeinem der Ansprüche von 1 bis 3, wobei die zweite Schaltung (42) und die dritte Schaltung (43) eine Halbbrücken-Dehnungsmeßstreifenanordnung umfassen.

5. Der Messsensor (1) nach Anspruch 4, wobei die Halbbrücken-Dehnungsmeßstreifenanordnung der zweiten Schaltung (42) einen ersten Dehnungsmessstreifen (J7) umfasst, der an einem Ende (31) des Trägerbandes (27) installiert ist, und einen zweiten Dehnungsmessstreifen (J5) umfasst, der in der Nähe der Mitte (28) und in Haupt-Spannrichtung abseits der Mitte (28) installiert ist.

6. Der Messsensor (1) nach Anspruch 5, wobei der zweite Dehnungsmessstreifen (J5) der zweiten Schaltung (42) von der Mitte (28) des Trägerbandes (27) in Haupt-Spannrichtung entfernt ist, sodass sich der zweite Dehnungsmessstreifen (J5) der genannten Fläche (24) nähert, auf die die Spannkraft ausgeübt wird.

7. Der Messsensor (1) nach irgendeinem der Ansprüche von 4 bis 6, wobei Halbbrücken-Dehnungsmeßstreifenanordnung der dritten Schaltung (43) einen ersten Dehnungsmessstreifen (J8) umfasst, der an einem Ende (32) des Trägerbandes (27) installiert ist, und einen zweiten Dehnungsmessstreifen (J6) umfasst, der in der Nähe der Mitte (28) installiert ist und von der Mitte (28) in der ersten Richtung senkrecht zur genannten Spannrichtung beabstandet ist.

8. Der Messsensor (1) nach Anspruch 7 in Abhängigkeit von Anspruch 5 oder 6, wobei der erste Dehnungsmessstreifen (J7) der Halbbrücken-Dehnungsmeßstreifenanordnung der zweiten Schaltung (42) an einer Kante (33) gegenüber dem ersten Dehnungsmessstreifen (J8) der Halbbrücken-Dehnungsmeßstreifenanordnung der dritten Schaltung (43) installiert ist.

9. Der Messsensor (1) nach irgendeinem der Ansprüche von 1 bis 8, wobei die erste Richtung der Längsrichtung des Trägerbandes (27) entspricht.

10. Der Messsensor (1) nach irgendeinem der Ansprüche von 1 bis 9, wobei sich die zweite Richtung entlang einer Achse (Z) erstreckt, die mit einer Achse (Y), in der sich die erste Richtung erstreckt, und mit einer Achse (X), in der sich die Haupt-Spannrichtung erstreckt, eine Orthonormalbasis bildet.

11. Ein Verfahren zum Messen einer Spannkraft bzw. Klemmkraft bzw. Anzugskraft, die gegen eine Fläche (24) eines Messsensors (1) nach irgendeinem der Ansprüche von 1 bis 9 ausgeübt wird, wenn ein Schraubverbindungsorgan (2) festgespannt wird, umfassend: einen Kalibrierungsschritt, in dessen Verlauf eine Vielzahl von Kräften nacheinander auf die genannte Fläche (24) des Sensors (1) ausgeübt wird, und in dessen Verlauf die von der ersten Schaltung (41), der zweiten Schaltung (42) und der dritten Schaltung (43) erzeugten Signale gemessen werden, um Parameter (a1, b1, c1, a2, b2, c2, a3, b3, c3, d1, d2, d3) zu bestimmen, die es ermöglichen, Folgendes zu schätzen: den Wert der Kräfte, die auf die genannte Fläche (24) des Sensors (1) ausgeübt werden, und den Abstand dieser Kräfte von der Mitte (22') der genannten Öffnung (22) des Sensors (1), und einen Schritt des Messens der genannten ausgeübten Spannkraft in Abhängigkeit von den durch die genannten drei Schaltungen erzeugten genannten Signalen und von den im Kalibrierungsschritt bestimmten Parametern (a1, b1, c1, a2, b2, c2, a3, b3, c3, d1, d2, d3).

**Claims**

1. A sensor (1) for measuring a tightening force applied to a screw assembly member (2), comprising a ring (21) having at least two opposite faces (23, 24) axially opposed the one to the other and a flat surface (25) perpendicular to said two opposite faces (23, 24),
   the sensor (1) comprising an electronic device (26) including a longitudinal support web (27) having two opposite ends (31, 32), said support web (27) being provided on said flat surface (25),
   said electronic device (26) comprising three circuits (41, 42, 43) mounted on said longitudinal support web (27) for which:

   a first circuit (41) is ready to generate a signal representative of a tightening force applied in a tightening direction to one of the two opposite faces (23, 24) ;
   a second circuit (42) is ready to generate a signal representative of the distance of said applied force relatively to the center (22') of ring (21) in a first direction perpendicular to said tightening direction ; and
   a third circuit (43) is ready to generate another signal representative of the distance of said applied force relatively to the center (22') of ring (21) in a second direction perpendicular to said tightening direction.

2. The measuring sensor (1) according to claim 1, wherein the first circuit (41) comprises a strain gauges full bridge assembly (J1, J2, J3, J4).

3. The measuring sensor (1) according to claim 2, wherein the full bridge assembly comprises two strain gauges (J2, J4) each one being provided on an opposite end (31, 32) of the support web (27), and two gauges (J1, J3) each one being provided near the center (28) of the support web (27), and spaced from said center (28) so that the one is symmetrically provided to the other relatively to the center (28) of the support web (27).

4. The measuring sensor (1) according to any of claims 1 to 3, wherein the second circuit (42) and the third circuit (43) comprise a half bridge assembly of strain gauges.

5. The measuring sensor (1) according to claim 4, wherein the gauges half bridge assembly of the second circuit (42) comprises a first gauge (J7) provided on an end (31) of the support web (27) and a second gauge (J5) provided near the center (28) and spaced away from the center (28) in the main tightening direction.

6. The measuring sensor (1) according to claim 5, wherein the second gauge (J5) of the second circuit (42) is spaced away relatively to the center (28) of the support web (27) in the main tightening direction so that the second gauge (J5) is provided closer in the direction of said face (24) to which the tightening force is applied.

7. The measuring sensor (1) according to any of claims 4 to 6, wherein the gauges half bridge assembly of the third circuit (43) comprises a first gauge (J8) provided on an end (32) of the support web (27) and a second gauge (J6) provided near the center (28) and spaced away from the center (28) in the first direction perpendicular to said tightening direction.

8. The measuring sensor (1) according to claim 7, when dependent on claim 5 or 6, wherein the first gauge (J7) of the gauges half bridge assembly of the second circuit (42) is provided on a edge (33) opposed to the first gauge (J8) of the gauges half bridge assembly of the third circuit (43).

9. The measuring sensor (1) according to any of claims 1 to 8, wherein the first direction corresponds to the longitudinal direction of the support web (27).

10. The measuring sensor (1) according to any of claims 1 to 9, wherein the second direction extends along an axis (Z) making an orthonormal basis with an axis (Y) in which extends the first direction and with an axis (X) in which extends the main tightening direction.

11. A method for measuring a tightening force applied against a face (24) of a measuring sensor (1) according to any of claims 1 to 9, during the tightening of a screw assembly member (2), comprising a calibration step during which a plurality of forces are successively applied to said face (24) of the sensor (1), and during which the signals generated by the first circuit (41), the second circuit (42) and the third circuit (43) are measured in order to determine parameters (a1, b1, c1, a2, b2, c2, a3, b3, c3, d1, d2, d3) allowing to estimate the value of the forces applied against said face (24) of the sensor (1) and the distance of these forces relatively to the center (22') of said opening (22) of the sensor (1), and a step for measuring said applied tightening force according to said signals generated by said three circuits and to the parameters (a1, b1, c1, a2, b2, c2, a3, b3, c3, d1, d2, d3) determined during the calibration step.

**Fig.1**

1

4

z
y
x

6

2a    2b

21    3

2

**Fig.2**

26

25

y

27

z

x    1

24

22

22'

23

21

# Fig.3

# Fig.4

**EP 3 465 123 B1**

## RÉFÉRENCES CITÉES DANS LA DESCRIPTION

**Documents brevets cités dans la description**

- FR 3025883 A3
- US 6250863 B1

- JP 2006162394 A